# EUROPEAN PATENT APPLICATION

(11) **EP 1 266 776 A2**
(43) Date of publication of application: **18.12.2002**
(21) Application number: 02011435.1
(22) Date of filing: 24.05.2002
(51) Int. Cl.: B60G 21/055, F16F 1/16, F16F 1/38

(54) **Anchoring device for a torsion bar**

(30) Priority: 12.06.2001 IT TO20010092 U
(71) Applicant: SIGOM S.r.l., I-10078 Venaria, Torino (IT)
(72) Inventor: Spinelli, Massimo, 10100 Torino (IT); Martinello, Ermanno, 10078 Venaria (TO) (IT)
(74) Representative: Lotti, Giorgio

(57) **Abstract**

Anchoring device (1) for a torsion bar (2) presenting a strut (3), an annular head (4) which is integral with the strut (3) and which is internally provided with a passing housing (5) and a rubber element (6) which is vulcanised inside the passing housing (5), and which is provided with a textured inner surface in order to improve its sealing action with the torsion bar (2) itself.

## Description

The The present invention relates to an anchoring device for a torsion bar.

Usually, anchoring devices which are used for anchoring torsion bars to vehicles are mounted onto the opposite free ends of the torsion bars, and they comprise a strut which presents a threaded end portion, an annular head which is integral with the strut and which is internally provided with a passing housing; a bush which is made of metal material and which is arranged inside the cylindrical housing and which is suitable for being engaged by an end of the torsion bar; and a cylindrical rubber element which is interposed between the bush and an internal surface of the passing housing.

Anchoring devices of the kind which have just been described present some disadvantages both from the point of view of assembly and from the point of view of their functioning after they have been assembled onto the torsion bars.

In fact, the internal surface of the passing housing and the external contours of the rubber element are conformed in such a way as to prevent the rubber element from sliding out of the housing, but although this conformation is absolutely necessary, it means that the rubber element has to be pushed with considerable force when it has to be inserted into the passing housing.

It should be pointed out, however, that from the functional point of view the end of the torsion bar is inserted directly into the bush, but despite the fact that this creates a firm seal between the torsion bar and the anchoring device , the direct contact which exists between the torsion bar and the bush means that vibrations arise as time goes by which, in turn, create a level of noise which is clearly audible inside the vehicle.

In addition, anchoring devices of the kind described above present a further disadvantage which arises from the necessity of having to texture the surfaces of the free ends of the torsion bars onto which such anchoring devices are to be fitted. In fact, in order to ensure that the anchoring devices are firmly blocked onto the torsion bar, it is necessary to thread each of the free ends of the torsion bar itself and, once the anchoring device has been mounted onto the relative free end, it is necessary to use at least one nut and some washers in order to effect the blocking action itself.

These kinds of operations are obviously expensive and also considerably increase the cycle time necessary for manufacturing the torsion bars. Finally, although a firm blocking action is obviously an extremely desirable characteristic, the method of effecting the blocking action which has just been described means that it is difficult to reposition the anchoring devices very quickly in the case that their reciprocal orientation with the torsion bar is altered in any way during transport.

The aim of the present invention is to produce an anchoring device for a torsion bar which will be free of the above-described disadvantages and which will also permit a reduction in the production cycle times and production costs of the torsion bars on which they are to be installed.

According to the present invention, an anchoring device for a torsion bar will be produced comprising a strut, an annular head which is integral with the strut and which is internally provided with a passing housing, and a rubber element which is arranged inside the passing housing; the device being characterised by the fact that the rubber element is vulcanised directly inside the passing housing, and presents an internal cylindrical surface, which is suitable for being directly engaged with interference by a free end of the torsion bar, and which is provided with a textured surface in order to increase the sealing action between the surface and the free end of the torsion bar itself.

The invention will now be described with reference to the attached drawings, which illustrate a non-limiting embodiment of the present invention and in which;
- FIGURE 1 is a plan view of a preferred form of embodiment of the anchoring device for a torsion bar which is the subject of the present invention; and
- FIGURE 2 is a lateral elevation view, with some parts in section, of the device illustrated in FIGURE 1.

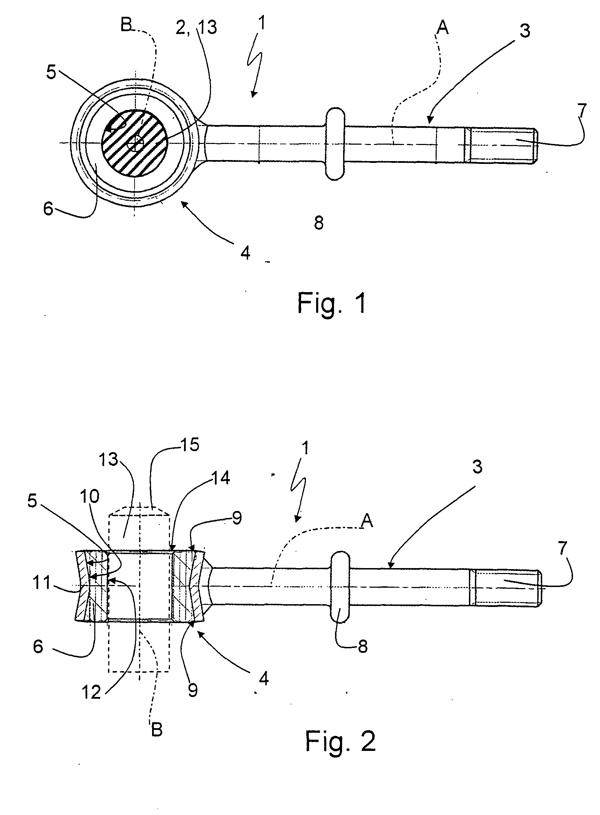

With reference to FIGURE 1, the number 1 refers to an anchoring device, in its entirety, for a torsion bar 2 comprising two free end portions 13 (only one of which is illustrated).

The device 1 is installed onto each free end 13, and is provided with a longitudinal A axis, and comprises a strut 3, an annular head 4, which is integral with the strut 3, and which is internally provided with a passing housing 5 which is coaxial to a B axis which is transverse to the A axis. The device 1 also comprises a rubber element 6 which is arranged inside the passing housing 5 and which is crossed by a relative free end 13, as is better described below.

The strut 3 presents a threading 7, on the opposite side to that which is integral with the head 4, and is also provided with an annular projection 8 about half way along its own length.

The housing 5 comprises two opposite openings 9 and a shaped inner surface 10, which is provided with an intermediate diameter which is smaller that that of a diameter of the two openings 9.

The rubber element 6 is directly vulcanised inside the housing 5 and is in direct contact with the surface 10, and it presents an internal cylindrical surface 12 which directly engages with interference the relative free end 13, which is extremely smooth, and is provided with a blunt edge 15 which is suitable for easing the insertion of the free end 13 itself into the surface 12.

The surface 12 presents two opposite blunt edges 14, and is textured by means of knurling, which is preferably but not necessarily broached in order to increase the friction between the surface 12 itself and the free end 13.

The presence of the rubber element 6 prevents the opposite ends 13 of the torsion bar 2 from entering into contact with respective metal surfaces and also, notwithstanding the firm blocking action which may be effected, means that any eventual repositioning of the strut 3 may be easily carried out if necessary when the bar 2 is being assembled onto a vehicle.

It is intended that the present invention not be limited to the form of embodiment herein described and illustrated, which is to be considered as an example of a form of embodiment of an anchoring device for a torsion bar, which may be subject to further modifications relating to the shape and disposition of it parts, as well as to details pertaining to its construction and assembly.

## Claims

1. Anchoring device (1) for a torsion bar (2) comprising a strut (3), an annular head (4) which. is integral with the strut (3) and which is internally provided with a passing housing (5), and a rubber element (6) which is arranged inside the passing housing (5); the device (1) being **characterised by** the fact that the rubber element (6) is vulcanised directly inside the passing housing (5), and presents an internal cylindrical surface (12), which is suitable for being directly engaged with interference by a free end (13) of the torsion bar (2), and which is provided with a textured surface in order to increase the sealing action with the free end (13) of the torsion bar (12) itself.

2. Device according to Claim 1, **characterised by** the fact that the textured surface of the said internal cylindrical surface (12) is knurled.

3. Device according to Claim 2, **characterised by** the fact that the said knurling is broached.

4. Device according to Claim 1, **characterised by** the fact that the passing housing (5) comprises two opposite openings (9), and a shaped internal surface (10) presenting an intermediate diameter which is smaller than a diameter of the two openings (9).

5. Device according to Claim 1, **characterised by** the fact that the internal cylindrical surface (12) of the rubber element (6) presents two opposite blunt edges (14).

6. Torsion bar (2) which is suitable for being anchored to a vehicle and which is provided with two free ends (13), and, for each free end (13), with an anchoring device (1), which comprises a passing housing (5), and a rubber element (6) which is arranged inside the passing housing (5); the torsion bar (2) being **characterised by** the fact that each free end (13) presents a blunt edge; the rubber element (6) being vulcanised directly into the passing housing (5), and presenting an internal cylindrical surface (12) which directly engages with interference the relative free end (13) and which is provided with a textured surface in order to increase its sealing action with the free end (13) itself.
